# EUROPÄISCHE PATENTANMELDUNG

(11) **EP 4 711 611 A1**
(43) Veröffentlichungstag der Anmeldung: **18.03.2026**
(21) Anmeldenummer: 25195559.7
(22) Anmeldetag: 13.08.2025
(51) Int. Cl.: F04B 13/00, F04B 15/02, F04B 53/14, F16J 1/00, F16J 15/3212

(54) **DOSIERKOLBEN FÜR EINE DOSIERPUMPE**

(30) Priorität: 13.09.2024 DE 102024126433
(71) Anmelder: ULMAN Dichtungstechnik GmbH, 71116 Gärtringen (DE)
(72) Erfinder: Stegmaier, Thomas, 73773 Aichwald (DE)
(74) Vertreter: Andrejewski - Honke Patent- und Rechtsanwälte Partnerschaft mbB

(57) **Zusammenfassung**

Dosierkolben (2) für eine Dosierpumpe mit einem zumindest abschnittsweise eine Mantelfläche bildenden flexiblen Dichtabschnitt (4) und einem innenliegend auf den Dichtabschnitt (4) einwirkbaren elastischen Vorspannelement (14). Der flexible Dichtabschnitt (4) ist an einem separat von einem Grundkörper (5) ausgebildeten Dosierelement (11) und das Vorspannelement (14) in einem zwischen dem Dosierelement (11) und dem Grundkörper (5) gebildeten Hohlraum (13) angeordnet.

## Beschreibung

Die vorliegende Erfindung betrifft einen Dosierkolben für eine Dosierpumpe mit einem zumindest abschnittsweise eine Mantelfläche bildenden flexiblen Dichtabschnitt und einem innenliegend auf den Dichtabschnitt einwirkbaren elastischen Vorspannelement.

Dosierkolben sind grundsätzlich aus dem Stand der Technik bekannt und bilden den Kernbestandteil von Dosierpumpen, welche üblicherweise dazu verwendet werden, um eine vordefinierte Menge von flüssigen oder pastösen Füllgütern in Behälter abzufüllen. Insbesondere handelt es sich hierbei um Lebensmittel wie z.B. Milchprodukte, Fruchtgelees oder dergleichen.

Der Dosierkolben ist innerhalb eines Dosierzylinders angeordnet und kann über eine zugeordnete Antriebseinrichtung entlang eines vordefinierten Stellwegs innerhalb des Dosierzylinders hin und her bewegt werden. Der Durchmesser des Dosierzylinders sowie der Stellweg des Dosierkolbens bestimmen die Menge, welche pro Takt innerhalb eines Behälters abgefüllt werden kann.

Hierbei ist es von entscheidender Bedeutung, dass der Dosierkolben dichtend an den Innenwandungen des Dosierzylinders entlang geführt wird, sodass kein Füllgut in den Bereich hinter dem Dosierkolben oder aber auch in Abschnitte des Dosierkolbens hinein gelangen kann. Dies ist einerseits entscheidend dafür, damit eine gleichbleibende Dosiermenge während des Betriebs sichergestellt werden kann. Anderseits wird auch verhindert, dass verderbliche Füllgüter in Bereiche der Dosierpumpe gelangen, welche nur nicht oder nur sehr aufwendig reinigbar sind. Entsprechend kann über eine geeignete Abdichtung sichergestellt werden, dass die Füllgüter nicht durch Keime oder Bakterien im Laufe des Betriebs kontaminiert werden.

Zugleich muss allerdings auch sichergestellt werden, dass trotz ausreichender Abdichtung weiterhin der Dosierkolben innerhalb des Dosierzylinders möglichst reibungsarm an den Innenwandung entlang gleitet. Dies wird üblicherweise dadurch erreicht, dass der Dosierkolben nur in einem vergleichsweise schmalen Bereich bezogen auf die Axiallänge des Dosierkolbens dichtend an der Innenwandung des Dosierzylinders anliegt. Entsprechend liegt nur eine schmale Kontaktfläche zwischen dem Dosierkolben und dem Dosierzylinder vor, wodurch die Reibung zwischen diesen beiden Bauteilen gering gehalten wird.

Aus der Praxis ist es bekannt, ein oder mehrere zueinander beabstandete Dichtelemente an einem Grundkörper des Dosierkolbens anzuordnen, welche jeweils eine ringförmige Dichtfläche ausbilden, über die eine Abdichtung an den Innenwandungen des Dosierzylinders bewirkt wird. Hierbei ist es allerdings problematisch, dass die hierzu verwendeten Dichtelemente üblicherweise aus einem elastomeren Material gefertigt sind, welches mit fortschreitender Betriebsdauer in Folge der Anpressung an der Innenwandung aus materialtechnischen Gründen nachgibt und infolgedessen kein ausreichender Anpressdruck aus Verschleißgründen an der Innenwandung gewährleistet werden kann. Infolgedessen ist es erforderlich, in vergleichsweise kurzen Produktionszeiträumen einen Austausch der Dichtelemente vorzusehen, wodurch der Ablauf und damit auch der Betrieb gestört und die Produktion angehalten werden muss.

Die DE 198 59 753 C1 lehrt im Unterschied daher eine Ausgestaltung, bei der ein im Wesentlichen aus einem Vollmaterial gebildeter Grundkörper mit einem ringförmigen Hohlraum ausgebildet ist, wobei der Grundkörper im Bereich des Hohlraums eine vergleichsweise dünne Materialstärke aufweist. Bei geeigneter Materialauswahl weist der Grundkörper somit im Bereich des Hohlraums eine Mantelfläche auf, welche flexibel ausgebildet ist und somit grundsätzlich dazu geeignet ist, eine Abdichtung zu bewirken. Um eine ausreichende Vorspannung zwischen dem Dichtabschnitt und dem Dosierzylinder zu bewirken, ist innerhalb des Hohlraums ein Vorspannelement angeordnet, welches die Mantelfläche an den Dosierzylinder herandrückt. Bei diesem Vorspannelement kann es sich um einen ringförmigen Elastomerkörper handeln. Alternativ ist es auch möglich ein metallisches Federelement vorzusehen, welches die entsprechende Anpresskraft erzeugt.

Eine solche Ausgestaltung hat den Vorteil, dass durch geeignete Ausbildung des Vorspannelements über einen langen Zeitraum eine ausreichend Anpresskraft erzeugt werden kann. Zugleich bietet eine solche Ausgestaltung den Vorteil, dass durch die im Wesentlichen einstückige Ausbildung der Mantelfläche kein Spalt innerhalb des Dosierkolbens vorliegt, über welchen Füllgut in Bereiche des Dosierkolbens eindringen kann, wodurch die Gefahr einer Keimbelastung reduziert wird.

Wenngleich sich eine solche Ausgestaltung bislang bewährt hat, so hat sich auch gezeigt, dass der Austausch des Elastomerkörpers im Wesentlichen nur dadurch möglich ist, dass der gesamte Dosierkolben ausgetauscht wird. Zugleich ist es je nach Produktionsart bzw. je nach abzufüllenden Füllgut teilweise erforderlich, eine Anpassung der Dichtgeometrie vorzusehen. Auch müssen je nach Füllgut unterschiedliche Materialien für den Dichtungskolben zumindest im Bereich des Dichtabschnittes vorgesehen werden. Entsprechend mangelt es den aus dem Stand der Technik bekannten Lösungen an einer ausreichenden Flexibilität, da üblicherweise der Austausch des gesamten Dosierkolbens zu erfolgen hat.

Vor diesem Hintergrund liegt der Erfindung die Aufgabe zugrunde, einen Dichtungskolben anzugeben, welcher in eine besonders flexible Bauart und eine kosteneffiziente Betriebsweise auszeichnet.

Lösung dieser Aufgabe und Gegenstand der Erfindung ist ein Dosierkolben gemäß Patentanspruch 1. Demnach ist erfindungsgemäß vorgesehen, dass der flexible Dichtabschnitt an einem separaten an dem Grundkörper ausgebildeten Dosierelement und das Vorspannelement in einem zwischen den Dosierelement und dem Grundkörper gebildeten Hohlraum angeordnet ist.

Gemäß einer solchen Ausgestaltung ist der flexible Dichtabschnitt an einem separat ausgebildeten Dosierelement angeordnet, welcher damit nicht integral mit dem Grundkörper ausgebildet ist. Das Dosierelement bildet hierbei lediglich einen Abschnitt der Mantelfläche, insbesondere einer zylindrischen Mantelfläche, des Dosierkolbens. Der Abschnitt kann hierbei zwischen 30 % und 90% der gesamten Mantelfläche betragen.

Eine solche Ausgestaltung weist den Vorteil auf, dass einerseits die Eigenschaften des Dichtabschnittes unabhängig von dem Material des Grundkörpers ausgewählt werden können. Andererseits ist es auch möglich, durch die separate Ausbildung eine das Dosierelementes an dem Grundkörper lösbar anzuordnen, sodass je nach Anwendungsfall oder Verschleißzustand des Dosierelementes ein Austausch des Dosierelementes und/oder des Vorspannelementes erfolgen kann.

Durch eine geeignete Materialauswahl des Dosierelementes kann auf unterschiedliche Arten von Füllgütern reagiert werden, sodass beispielsweise besonders chemisch stabile Materialien zum Einsatz kommen können, wenn dies für bestimmte Füllgüter erforderlich ist. Auch kann durch die Wahl des Vorspannelementes der Anpressdruck zwischen dem Dichtabschnitt und dem Dosierzylinder gezielt eingestellt werden. Es ergibt sich somit ein modularer Aufbau des Dosierkolbens, welcher in Abhängigkeit der an den Dosierkolben gestellten Anforderungen stets angepasst und gewartet werden kann. Im Gegensatz zu den bislang aus dem Stand der Technik bekannten Lösungen ist es daher nicht erforderlich, den gesamten Dosierkolben auszutauschen. Zugleich kann allerdings auch der Vorteil der Einbindung eines Vorspannelementes ausgenutzt werden, über welches der Anpressdruck exakt festgelegt wird.

Gemäß einer Weiterbildung der Erfindung weist das Dosierelement eine nach außen hin vorspringende Dichtlippe auf. Entsprechend bildet im Wesentlichen die Dichtlippe den Dichtabschnitt, über welchen das Dosierelement entlang der Innenwandung eines Dosierzylinders geführt werden kann. Somit ist die konstruktive Ausgestaltung dieser Dichtlippe maßgeblich für die Dichtwirkung sowie für die Gleiteigenschaften. Besonders bevorzugt ist in diesem Zusammenhang eine Ausgestaltung, bei der die Dichtlippe im Querschnitt U-förmig ausgebildet ist. Die Dichtlippe erstreckt sich ferner bevorzugt ringförmig in Umfangsrichtung. Durch diese U-Form bilden sich im Wesentlichen zwei in axialer Richtung parallel zueinander versetzte Vorsprünge, welche je nach Anpresskraft in radialer Richtung zusammen gedrückt werden und im Wesentlichen linienförmige Dichtflächen ausbilden. Selbstverständlich ist es aber auch denkbar, dass die Dichtlippe anderweitige Querschnitte aufweist. So kann beispielsweise die Dosierlippe nicht nur zwei sondern drei, vier oder mehr linienförmige Vorsprünge aufweisen, welche dann beim Einsatz innerhalb eines Dosierzylinders verformt werden.

Gemäß einer Weiterbildung der Erfindung ist das Dosierelement mit einer Hinterschneidung in einer Umfangsnut des Grundkörpers eingesetzt. Das Einbringen einer Umfangsnut weist hierbei den Vorteil auf, dass das Dosierelement zumindest gegenüber den angrenzenden Abschnitten des Grundkörpers flächenbündig angeordnet werden kann, sodass zwischen dem Dosierelement und dem Grundkörper keine Stufe vorgesehen ist. Mithilfe der Hinterschneidung wird dann sichergestellt, dass das Dosierelement innerhalb der Umfangsnut gehalten wird. Darüber hinaus kann mithilfe der Hinterschneidung auch durch eine im Wesentlichen formschlüssige Ausgestaltung mit der Umfangsnut eine ausreichende Dichtungswirkung zwischen Dosierelement und Grundkörper sichergestellt werden, wodurch das Eindringen von Füllgut in Bereiche des Dosierkolbens verhindert wird. Entsprechend dient die Hinterschneidung nicht nur der Sicherung des Dosierelementes innerhalb der Umfangsnut sondern auch der Abdichtung gegenüber dem Eindringen von Füllgut. Dies ist gerade beim Einsatz von Lebensmitteln besonders sinnvoll, um auch über einen längeren Betriebsablauf die Bildung von Keimen oder Bakterien zu verhindern.

Wenngleich allein durch das Vorsehen einer entsprechenden Hinterschneidung eine gewisse Dichtfunktion bewirkt wird, so trägt die konstruktive Ausgestaltung dieser Hinterschneidung maßgeblich zur Dichtwirkung bei. Besonders bevorzugt ist eine Ausgestaltung, bei der die Umfangsnut eine sich nach außen hin zur Mantelfläche verjüngende Breite aufweist. Hierbei bezieht sich die Breite der Unfangsnut auf die in axialer Richtung zueinander beabstandeten Umfangsränder. Ausgehend von einer im Wesentlichen rotationssymmetrischen Ausgestaltung des Dosierkolbens nimmt somit die Breite der Umfangsnut ausgehend von einem Nutboden radial nach außen hin ab. Bei einer im Wesentlichen formschlüssigen Ausbildung des Dosierelementes wird somit durch die verjüngende Form der Umfangsnut eine Sicherung des Dosierelementes innerhalb der Umfangsnut bewirkt.

Eine solche Verjüngung kann grundsätzlich durch Einbringen einer Stufenform ermöglicht werden. Besonders bevorzugt ist jedoch eine Ausgestaltung, bei der sich die Breite zumindest abschnittsweise nach außen hin kontinuierlich verjüngt. Gemäß einer solchen Ausgestaltung bilden die Umfangsnut zumindest an einem Nutrand, bevorzugt aber an beiden Nuträndern, jeweils ein unter einem Verjüngungswinkel gebildeten und in axialer Richtung vorspringenden Kragenabschnitt. Der Verjüngungswinkel beträgt vorteilhafterweise zwischen 18 und 35°, besonders bevorzugt zwischen 20 und 30°. Beispielsweise kann der Verjüngungswinkel 25° betragen.

Eine bevorzugte Weiterbildung sieht vor, dass das Dosierelement eine an den Kragenabschnitt angrenzende Anlagefläche aufweist, wobei die Anlagefläche unter einem Spaltwinkel zum Kragenabschnitt angeordnet ist und wobei der Spaltwinkel zumindest 5° beträgt. Bevorzugt beträgt der Spaltwinkel zwischen 5° und 15°, insbesondere zwischen 5° und 10°. Entsprechend weisen gemäß einer solchen Ausgestaltung sowohl das Dosierelement als auch die Umfangsnut eine sich nach außen hin kontinuierlich verjüngende Breite auf, wobei sich aber das Maß der Verjüngung voneinander unterscheidet. Durch die spitzere Ausgestaltung des Kragenabschnittes drückt der Grundkörper über den Kragenabschnitt linienförmig in das Dosierelement hinein, wodurch sich eine im Wesentlichen spaltfreie Ausbildung ergibt.

Eine bevorzugte Ausgestaltung der Erfindung sieht ferner vor, dass das Dosierelement in axialer Richtung zwischen einem Aufnahmeteil und einem separaten Verschlussteil des Grundkörpers angeordnet ist. Entsprechend ist der Grundkörper zumindest aus zwei separaten Bauteilen gebildet, welche in axialer Richtung aneinander anschließen. Eine Anordnung des Dosierelementes zwischen dem Aufnahmeteil und dem Verschlussteil weist hierbei den Vorteil auf, dass dieses nicht nur formschlüssig sondern auch zumindest teilweise klemmend zwischen den beiden Bauteilen angeordnet werden kann, wodurch einerseits eine Sicherung und andererseits eine ausreichende Dichtwirkung zwischen dem Dosierelement und dem Grundkörper bewirkt wird. Gemäß einer solchen Ausgestaltung schließen das Aufnahmeteil und das Verschlussteil bevorzugt unmittelbar an das Dosierelement an, sodass dann auch die vorspringenden Kragenabschnitte jeweils an dem Aufnahmeteil und/oder dem Verschlussteil angeordnet sind.

Bevorzugt sind ferner das Aufnahmeteil und das Verschlussteil lösbar miteinander verbunden. Entsprechend kann das Aufnahmeteil von dem Verschlussteil gelöst und in axiale Richtung von diesem entnommen werden. In diesem Fall liegen dann das Dosierelement sowie das Vorspannelement frei und können ebenfalls durch Verschieben in axialer Richtung von dem Grundkörper gelöst werden. Sodann können in umgekehrter Reihenfolge ein neues Dosierelement und/oder ein neues Vorspannelement eingesetzt und durch Befestigen des Aufnahmeteils mit dem Verschlussteil fixiert werden.

Das Vorspannelement selbst greift bevorzugt in einen Rücksprung des Dosierelementes ein. Dieser Rücksprung ist auf einer der Mantelfläche gegenüberliegenden Seite des Dosierelementes angeordnet und erstreckt sich bevorzugt entlang der Umfangsrichtung. Der Rücksprung ist darüber hinaus bevorzugt gegenüberliegend von der Dichtlippe angeordnet, wodurch sichergestellt wird, dass das Vorspannelement stets auf Höhe der Dichtlippe angeordnet ist, wobei durch den Rücksprung sichergestellt wird, dass ein Verschieben in axialer Richtung verhindert wird. Entsprechend kann das Vorspannelement stets unmittelbar auf die Dichtlippe einwirken.

Das Vorspannelement ist darüber hinaus bevorzugt ein ringförmiger Elastomerkörper. Dieser ringförmige Elastomerkörper kann dann entlang des gesamten Umfangs in den ringförmigen Rücksprung des Dosierelementes eingreifen, sodass sich entlang des gesamten Umfangs eine gleichmäßige Anpresskraft und damit auch eine gleichmäßige Dichtwirkung einstellt. Der Elastomerkörper ist vorzugswiese aus einem Material gebildet, welches einerseits eine ausreichende Elastizität und andererseits auch eine ausreichende Anpresskraft ermöglicht. Bevorzugt kann der Elastomerkörper zumindest teilweise, insbesondere vollständig, aus einem Silikon-Kautschuk (VMQ) gebildet sein. Selbstverständlich ist es aber auch möglich, den Elastomerkörper aus anderen Materialien oder aus einem Gemisch mehrerer Materialien zu bilden. Der Elastomerkörper weist darüber hinaus bevorzugt im Wesentlichen einen rechteckigen Querschnitt auf.

Das Dichtelement selbst ist bevorzugt aus einem thermoplastischen Material gebildet. Insbesondere Polytetrafluorethylen (PTFE) hat sich hier als besonders geeignet herausgestellt, da dieses eine hohe Lebensmittelbeständigkeit aufweist. Allerdings ist es auch möglich andere thermoplastische Materialien wie Polyoxymethylene (POM) oder Polyethylen (PE), insbesondere ultrahochmolekulares Polyethylen (UHMWPE), zu verwenden.

Der Grundkörper bzw. das Aufnahmeteil und/oder das Verschlussteil, können aus Stahl, insbesondere aus Edelstahl, oder aus Aluminium gebildet sein. Da der Grundkörper selbst nicht für die Dichtwirkung verantwortlich ist, ist das Material im Bereich der Mantelfläche auch nicht anhand der flexiblen Eigenschaften auszuwählen. Gerade Edelstahl ist im Zusammenhang mit dem Einsatz bei Lebensmitteln besonders geeignet, da es einerseits eine hohe Lebensmittelbeständigkeit aufweist und andererseits einfach und effektiv gereinigt bzw. sterilisiert werden kann.

Eine Weiterbildung des Dosierkolbens sieht ferner vor, dass eine Kolbenstange lösbar an dem Grundkörper befestigt ist. Diese Kolbenstange stellt dann eine Wirkverbindung mit einer Antriebseinrichtung her, sodass eine oszillierende Bewegung auf den Grundkörper übertragen werden kann. Besonders bevorzugt ist in diesem Zusammenhang Ausgestaltung, bei der die Kolbenstange über einen Bajonettverschluss an dem Grundkörper befestigt ist. Ein solcher Bajonettverschluss ermöglicht in einfacher Art und Weise eine Befestigung, wobei nach Einbringen der Kolbenstange in den Grundkörper durch eine einfache Drehung ein Verschluss bewirkt wird. Eine solche Befestigung ist daher deutlich einfacher als mit einem Gewinde, da der Grundkörper lediglich um einen gewissen Winkel verdreht werden muss. Gemäß einer solchen Ausgestaltung weist die Kolbenstange einen Anschlussabschnitt auf, wobei am Anschlussabschnitt zumindest zwei radial nach außen hin vorspringende Befestigungsbolzen angeordnet sind. Diese Befestigungsbolzen werden über eine entsprechende Ausnahme innerhalb des Grundkörpers angeordnet und bewirken sodann durch Verdrehen einen Formschluss mit dem Grundkörper. Üblicherweise sind die Befestigungsbolzen im Befestigungszustand innerhalb des Aufnahmeteils angeordnet, sodass entsprechend das Verschlussteil lediglich eine geeignete Durchbrechung aufweise muss.

Bevorzugt schließt der Anschlussabschnitt an einen Basisabschnitt an, wobei eine Dichtscheibe zwischen dem Grundkörper und dem Basisabschnitt angeordnet ist. Der Anschlussabschnitt weist bevorzugt gegenüber dem Basisabschnitt einen geringeren Durchmesser auf, sodass entsprechend in axialer Richtung eine Anlagefläche zwischen dem Grundkörper und dem Basisabschnitt gebildet wird. Durch Anordnung einer Dichtscheibe kann einerseits eine Abdichtung zwischen dem Grundkörper und der Kolbenstange bewirkt werden. Ergänzend oder alternativ kann diese Dichtscheibe auch eine Verdrehsicherung bewirken.

Eine Weiterbildung der Erfindung sieht darüber hinaus vor, dass das Dosierelement über den Bajonettverschluss klemmend zwischen dem Aufnahmeteil und dem Verschlussteil gehalten wird. Entsprechend ist der Bajonettverschluss dafür verantwortlich, dass nicht nur die Kolbenstange an dem Grundkörper befestigt wird. Vielmehr hält der Bajonettverschluss das Dosierelement innerhalb des Grundkörpers und kann darüber hinaus dafür verantwortlich sein, dass sämtliche Komponenten des Dosierkolbens miteinander fixiert werden. Hierbei hält die Kolbenstange durch den Bajonettverschluss einerseits das Aufnahmeteil und weist darüber hinaus durch das Vorsehen eines verjüngten Anschlussabschnittes eine Anlagefläche auf, sodass dann zwischen dem Aufnahmeteil und der Anlagefläche sämtliche Komponenten gegeneinander klemmend fixiert werden.

Gegenstand der Erfindung ist ferner eine Dosierpumpe mit einem Dosierzylinder und einem innerhalb des Dosierzylinders schiebbeweglich angeordneten erfindungsgemäßen Dosierkolben. Der Dosierkolben kann dann über eine daran befestigte Kolbenstange mit einer Antriebseinheit verbunden sein, wobei die Antriebseinheit dazu eingerichtet ist, eine oszillierende Bewegung des Dosierkolbens zu bewirken. Der Dosierkolben ist hierbei gemäß den vorherigen Beschreibungen erfindungsgemäß ausgebildet.

Im Folgenden wird die Erfindung anhand von exemplarischen Ausführungsbeispielen näher erläutert. Es zeigen:
Fig. 1 eine schematische Darstellung einer Dosierpumpe mit einem erfindungsgemäßen Dosierkolben
Fig. 2 den erfindungsgemäßen Dosierkolben in einer isometrischen Schnittdarstellung
Fig. 3 eine Explosionsdarstellung des erfindungsgemäßen Dosierkolbens
Fig. 4 Detailansicht im Bereich des Übergangs zwischen Grundkörper und Dosierelements

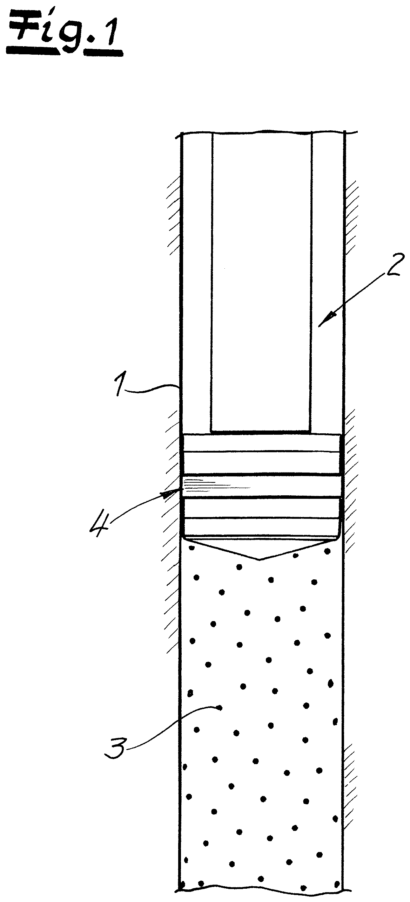

Die Fig. 1 zeigt eine Dosierpumpe mit einem Dosierzylinder 1 und einem innerhalb des Dosierzylinders 1 schiebbeweglich angeordneten Dosierkolben 2. Der Dosierkolben 2 ist dichtend gegenüber den Wandungen des Dosierzylinders 1 angeordnet, wobei im Zuge einer rückwärtigen Bewegung ein Füllgut 3 in den Dosierzylinder 1 gelangt, welches bei einer entgegengesetzten nach vorne gerichteten Bewegung des Dosierkolbens 2 ausgetragen und in einen nicht dargestellten Behälter eingefüllt wird. Der Durchmesser des Dosierzylinders 1 sowie der Fahrweg des Dosierkolbens 2 bestimmen die Menge, welche pro Intervall in einen Behälter eingefüllt werden kann. Hierdurch ist es möglich, die abgefüllte Menge exakt zu dosieren.

Von besonderer Bedeutung ist, dass der Dosierkolben 2 dichtend gegenüber den Wandungen des Dosierzylinders 1 angeordnet ist, damit kein Füllgut 3 in den rückwärtigen Bereich des Dosierzylinders 1 gelangen kann. Dies ist gerade dann entscheidend, wenn es sich bei dem Füllgut 3 um ein Lebensmittel handelt, wobei durch eine geeignete Abdichtung sichergestellt wird, dass keine Keime oder Bakterien in dem rückwärtigen Bereich des Dosierzylinders 1 gebildet werden können. Darüber hinaus ist auch eine deutlich einfachere Reinigung möglich.

Vor diesem Hintergrund ist es bekannt, dass entsprechende Dosierkolben 2 einen Dichtabschnitt 4 aufweisen, über welchen der Dosierkolben 2 an den Innenwandungen des Dosierzylinders anliegt. Dieser Dichtabschnitt 4 ist hierbei so ausgebildet, dass einerseits eine ausreichende Abdichtung gewährleistet wird, während andererseits die Reibung in einem Maß gehalten wird, welches ein problemloses Entlanggleiten des Dosierkolbens 2 an den Innenwandungen des Dosierzylinders 1 ermöglicht. Diese Abdichtung muss hierbei über einen möglichst langen Betriebszeitraum sichergestellt werden. Zugleich ist es aber auch erforderlich, dass in geeigneten Zeitabständen die den Dichtabschnitt 4 bildenden Komponenten des Dosierkolbens 2 ausgetauscht werden können. Ein solcher Austausch kann auch erforderlich sein, wenn bestimmte Arten von Füllgütern 3 dosiert werden sollen.

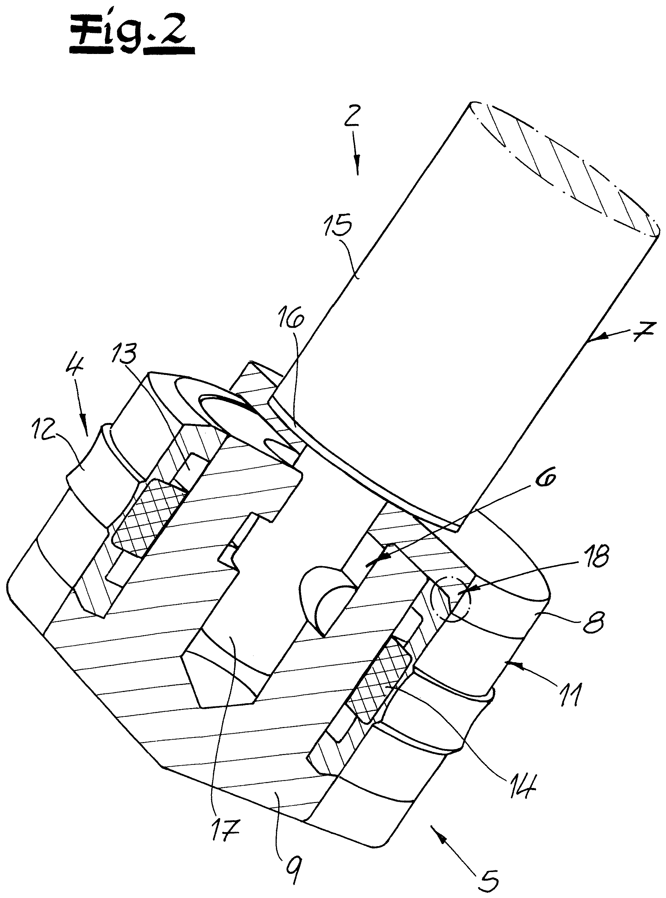

Die Fig. 2 zeigt den Dosierkolben 2 in einer detaillierten Ausgestaltung. Der Dosierkolben 2 weist einen Grundkörper 5 auf, welcher über einen Bajonettverschluss 6 an einer Kolbenstange 7 befestigt ist. Der Grundkörper 6 besteht ferner aus einem Aufnahmeteil 9 und einem darauf angeordneten Verschlussteil 8.

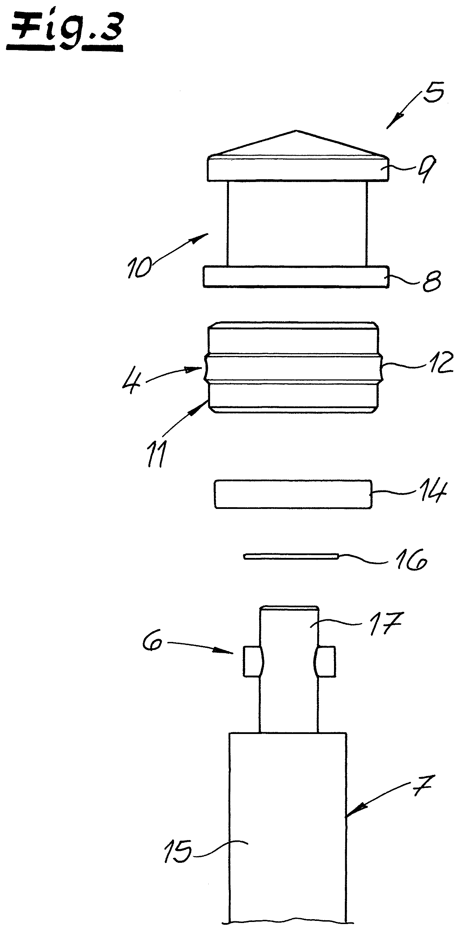

Die genaue Ausbildung und Anordnung der einzelnen Komponenten des Dosierkolbens 2 können auch der Explosionsdarstellung in der Fig. 3 entnommen werden.

Das Verschlussteil 8 und das Aufnahmeteil 9 bilden eine Umfangsnut 10, in welche ein separat von dem Grundkörper 5 ausgebildetes Dosierelement 11 eingesetzt ist und an welchem der flexible Dichtabschnitt 4 gebildet ist. Gemäß einer solchen Ausgestaltung kann dann der Grundkörper 5 beispielsweise aus Edelstahl gefertigt werden, während es sich bei dem Material für das Dosierelement 11 vorzugsweise um ein thermoplastisches Elastomer, beispielsweise PTFE, handelt. Zur Bildung des Dichtabschnittes 4 kann eine Dichtlippe 12 vorgesehen sein, welche sich in Umfangsrichtung um den Grundkörper 5 herum erstreckt und welche im Querschnitt U-förmig ausgebildet ist.

Um einen ausreichenden Anpressdruck des Dichtabschnittes 4 auf die Innenwandungen des Dosierzylinders 1 bewirken zu können ist darüber hinaus ein Vorspannelement 14 in Form eines ringförmigen Elastomerkörpers vorgesehen, welches in einem Hohlraum 13 zwischen dem Dosierelement 11 und dem Grundkörper 2 bzw. dem Aufnahmeteil 9 angeordnet ist. Dieses Vorspannelement 14 ist aus einem elastischen Material, vorzugsweise aus einem Silikon-Kautschuk, gebildet und unmittelbar hinter dem Dichtabschnitt 4 bzw. der Dichtlippe 12 angeordnet. Entsprechend handelt es sich bei dem Grundkörper 2, dem Dosierelement 11 und dem Vorspannelement 14 um separat voneinander ausgebildete Bauteile.

Sämtliche Komponenten des Dosierkolbens 2 werden ferner allein durch den Bajonettverschluss 6 klemmend an der Kolbenstange 7 gehalten. Hierzu wirkt der Bajonettverschluss 6 auf das Aufnahmeteil 9, während ein radial vorspringender Basisabschnitt 15 der Kolbenstange 7 auf das Verschlussteil 8 wirkt und wobei das Dosierelement 4 klemmend zwischen dem Verschlussteil 8 und dem Aufnahmeteil 9 gehalten wird. Darüber hinaus ist zwischen dem Basisabschnitt 7 und dem Verschlussteil 8 eine Dichtscheibe 16 eingelegt, welche einerseits eine Abdichtung und andererseits eine Verdrehsicherung bewirkt. Die Kolbenstange 7 greift sodann über einen Anschlussabschnitt 17 durch das Verschlussteil 8 hindurch in das Aufnahmeteil 9 und wird dann über den bereits zuvor erwähnten Bajonettverschluss 6 befestigt.

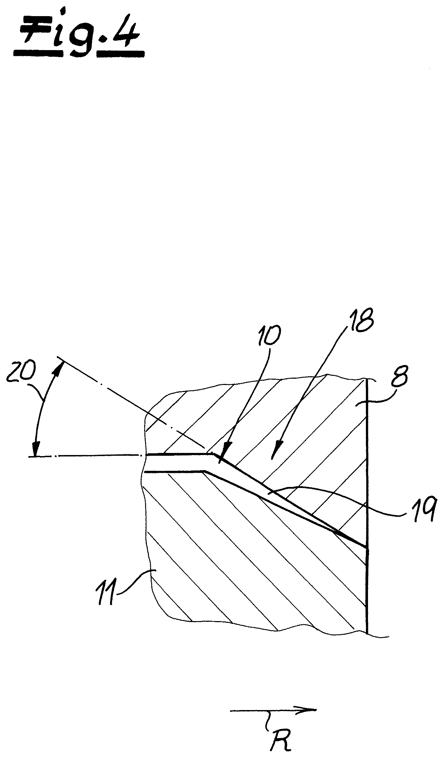

Die Fig. 4 zeigt den in der Fig. 2 umkreisten Ausschnitt in einer detaillierten Ansicht. Hierbei wird deutlich, dass sowohl die Umfangsnut 10 als auch das Dosierelement 11 nach außen hin bzw. in radialer Richtung R in Richtung der Mantelfläche eine sich verjüngende Breite aufweisen. Dies führt dazu, dass sich an den Nuträndern des Grundkörpers 5 bzw. am Aufnahmeteil 9 und am Verschlussteil 8 jeweils ein Kragenabschnitt 18 herausbildet, in welchem die Breite der Umfangsnut 10 kontinuierlich über einen Verjüngungswinkel 20 abnimmt. Auch die Breite des Dosierelementes 11 nimmt kontinuierlich ab, wobei sich allerdings zwischen dem Dosierelement 11 und dem Kragenabschnitt 18 ein Spaltwinkel 19 ausbildet, so dass der Kragenabschnitt 18 aufgrund der steileren Ausbildung das Dosierelement 11 an der Mantelfläche ein Stück weit eindrückt und hierdurch eine Spaltfreiheit gewährleistet wird. In diesem Zusammenhang ist anzumerken, dass gemäß der Figur 4 das Dosierelement 11 noch nicht vollständig klemmend zwischen dem Verschlussteil 8 und dem Aufnahmeteil 9 angeordnet ist.

## Patentansprüche

1. Dosierkolben (2) für eine Dosierpumpe mit einem zumindest abschnittsweise eine Mantelfläche bildenden flexiblen Dichtabschnitt (4) und einem innenliegend auf den Dichtabschnitt (4) einwirkbaren elastischen Vorspannelement (14),
**dadurch gekennzeichnet, dass**
der flexible Dichtabschnitt (4) an einem separat von einem Grundkörper (5) ausgebildeten Dosierelement (11) und das Vorspannelement (14) in einem zwischen dem Dosierelement (11) und dem Grundkörper (5) gebildeten Hohlraum (13) angeordnet ist.

2. Dosierkolben nach Anspruch 1, **dadurch gekennzeichnet, dass** Dosierelement (11) eine nach außen hin vorspringende Dichtlippe (12) aufweist.

3. Dosierkolben nach einem der vorangegangenen Ansprüche, **dadurch gekennzeichnet, dass** das Dosierelement (11) mit einer Hinterschneidung in einer Umfangsnut (10) des Grundkörpers (5) eingesetzt ist.

4. Dosierkolben nach Anspruch 3, **dadurch gekennzeichnet, dass** die Umfangsnut (10) eine sich nach außen hin zur Mantelfläche verjüngende Breite aufweist.

5. Dosierkolben nach Anspruch 4, **dadurch gekennzeichnet, dass** die Umfangsnut (10) zumindest an einem Nutrand einen unter einem Verjüngungswinkel (20) gebildeten und in axialer Richtung (X) vorspringenden Kragenabschnitt (18) aufweist.

6. Dosierkolben nach Anspruch 5, **dadurch gekennzeichnet, dass** das Dosierelement (11) eine an den Kragenabschnitt (18) angrenzende Anlagefläche aufweist, wobei die Anlagefläche unter einem Spaltwinkel (19) zum Kragenabschnitt (18) angeordnet ist und wobei der Spaltwinkel (19) zwischen 5° und 10° beträgt.

7. Dosierkolben nach einem der vorangegangenen Ansprüche, **dadurch gekennzeichnet, dass** Dosierelement (11) in axialer Richtung (X) zwischen einem Aufnahmeteil (9) und einem separaten Verschlussteil (8) des Grundkörpers (5) angeordnet ist.

8. Dosierkolben nach einem der vorangegangenen Ansprüche, **dadurch gekennzeichnet, dass** das Vorspannelement (14) ein ringförmiger Elastomerkörper ist.

9. Dosierkolben nach einem der vorangegangenen Ansprüche, **dadurch gekennzeichnet, dass** das Dosierelement (11) aus einem thermoplastischen Material gebildet ist.

10. Dosierkolben nach einem der vorangegangenen Ansprüche, **dadurch gekennzeichnet, dass** das Aufnahmeteil (9) und/oder das Verschlussteil (8) aus einem metallischen Werkstoff gebildet sind.

11. Dosierkolben nach einem der vorangegangenen Ansprüche, **dadurch gekennzeichnet, dass** eine Kolbenstange (7) an dem Grundkörper (5) lösbar befestigt ist.

12. Dosierkolben nach Anspruch 11, **dadurch gekennzeichnet, dass** die Kolbenstange (7) über einen Bajonettverschluss (6) an dem Grundkörper (5) befestigt ist.

13. Dosierkolben nach Anspruch 11 oder 12, **dadurch gekennzeichnet, dass** die Kolbenstange (7) einen Basisabschnitt (15) und einen daran anschließenden in den Grundkörper (5) eingreifenden Anschlussabschnitt (17) aufweist, wobei eine Dichtscheibe (16) zwischen dem Grundkörper (5) und dem Basisabschnitt (15) angeordnet ist.

14. Dosierkolben nach einem der Ansprüche 12 bis 13, **dadurch gekennzeichnet, dass** das Dosierelement (11) über den Bajonettverschluss (6) klemmend zwischen dem Aufnahmeteil (9) und dem Verschlussteil (8) gehalten wird.

15. Dosierpumpe mit einem Dosierzylinder (1) und einem innerhalb des Dosierzylinders schiebbeweglich angeordneten Dosierkolben (2) nach einem der vorangegangenen Ansprüche.
